# FASCICULE DE BREVET EUROPEEN

(11) **EP 2 595 868 B1**
(45) Date de publication et mention de la délivrance du brevet: **29.07.2015**
(21) Numéro de dépôt: 11754886.7
(22) Date de dépôt: 15.07.2011
(51) Int. Cl.: B62K 25/24

(54) **DISPOSITIF DE TRAIN AVANT DE VEHICULE A ROUE AVANT DIRECTRICE UNIQUE, ET VEHICULE MUNI D'UN TEL DISPOSITIF DE TRAIN AVANT**
FRONTVORRICHTUNG FÜR EIN FAHRZEUG MIT EINEM EINZIGEN GELENKTEN VORDERRAD UND FAHRZEUG MIT EINER DERARTIGEN FRONTVORRICHTUNG
FRONT END DEVICE FOR A VEHICLE WITH A SINGLE STEERED FRONT WHEEL, AND VEHICLE EQUIPPED WITH A SUCH A FRONT END DEVICE

(30) Priorité: 22.07.2010 FR 1055986
(43) Date de publication de la demande: 29.05.2013
(73) Titulaire: Excent France, 31770 Colomiers (FR)
(72) Inventeur: LAVABRE, Vincent, F-Balma 31130 (FR)
(74) Mandataire: Hartmann, Jean-Luc
(86) Numéro de dépôt international: PCT/FR2011/051700
(87) Numéro de publication internationale: WO 2012/010784

(56) Documents cités:
- EP-A2- 1 104 738
- EP-A2- 1 270 391

## Description

La présente invention se rapporte à un dispositif de train avant de véhicule comportant :
- un axe de direction, apte à être lié à une colonne de direction du châssis du véhicule selon une liaison comportant un degré de liberté en rotation,
- un té de fourche supérieur lié au dit axe de direction,
- un té de fourche inférieur lié au dit axe de direction,
- au moins un bras supérieur de fourche, fixé sur lesdits tés de fourche supérieur et inférieur,
- au moins un bras inférieur de fourche, lié au dit au moins un bras supérieur de fourche, au moyen d'une liaison de type parallélogramme déformable, par l'intermédiaire d'au moins un bras médian supérieur et au moins un bras médian inférieur, articulés à leurs deux extrémités sur ledit au moins un bras supérieur de fourche et au moins un bras inférieur de fourche, respectivement,
- une roue avant directrice unique, montée rotative sur ledit au moins un bras inférieur de fourche,
- des moyens de suspension conférant une liaison élastique amortie entre ledit au moins un bras inférieur de fourche et ledit au moins un bras supérieur de fourche,
- lesdits au moins un bras médian supérieur et inférieur articulés sont disposés au-dessous du té de fourche inférieur.

De tels dispositifs de train avant peuvent trouver application dans les véhicules à deux ou trois roues dont une avant directrice unique, en particulier les motocyclettes ou les tricycles motorisés. La présente invention se rapporte également aux véhicules munis d'un tel dispositif de train avant.

L'art antérieur nous enseigne des dispositifs de train avant : on connaît par exemple les fourches télescopiques qui n'entrent pas dans le domaine d'application de la présente invention et qui présentent les inconvénients suivants :
- elles sont soumises à des contraintes importantes de flexion, notamment en phase de freinage,
- il n'y a pas de cinématique de démultiplication et l'hydraulique est gérée à vitesse élevée entraînant une émulsion et un échauffement important du fluide, d'où une viscosité variable et un amortissement variable,
- elles talonnent facilement en phase de freinage, réduisant la capacité de la suspension.

On connaît également les bras oscillants avec amortisseur, qui n'entrent pas dans le domaine d'application de la présente invention et qui présentent quant à eux les caractéristiques suivantes :
- ils démultiplient la suspension, suppriment ou limitent la plongée au freinage, résolvent en grande partie les inconvénients de la fourche télescopique, mais induisent d'autres inconvénients comme :
- l'axe de direction n'est pas relié directement au guidon, et le bras oscillant ne tourne pas, impliquant l'utilisation d'une biellette, et l'usage d'un moyeu rotatif rendant la direction plus complexe.

On connaît encore les combinés bras oscillant monté sur colonne de direction, qui n'entrent pas dans le domaine d'application de la présente invention et qui présentent quant à eux les caractéristiques suivantes :
- ils résolvent en grande partie les problèmes du bras oscillant avec amortisseur tel que décrit plus haut, sauf en ce qui concerne l'implantation du radiateur à eau et le passage du circuit d'échappement, qui restent délicats à opérer, mais induisent d'autres inconvénients comme :
- poids excessif, inertie de la direction,
- l'amortisseur travaille en direct et de manière non démultipliée, sans toutefois reprendre la charge en flexion,
- l'empattement du véhicule est variable avec l'enfoncement.

On connaît donc les fourches à parallélogramme, qui présentent les caractéristiques suivantes :
- elles résolvent également en grande partie les problèmes soulevés par la fourche télescopique, mais induisent d'autres inconvénients comme :
- pour un débattement utile de la suspension avant, la taille et le poids des éléments non suspendus augmentent limitant la performance de fourche,
- le réglage de l'assiette est généralement indissociable du réglage de la suspension,
- la fourche à parallélogramme ne permet pas le montage d'un carénage au profil conventionnel.

Un tel type de fourche est connu du document EP 1 270 391 ou du document EP 1 104 738 qui se rapporte à un guidage de roue avant de motocyclette comprenant :
- une fourche avec deux branches reliées entre elles par un té supérieur et un té inférieur de fourche,
- une tête de direction fixée au cadre avant et à laquelle sont reliés en rotation les tés de fourches,
- un bras médian supérieur et deux bras médians inférieurs dont les extrémités avant sont reliées en basculement aux branches de fourche,
- deux bielles reliées en basculement aux extrémités arrière du bras médian supérieur et des deux bras médians inférieurs, et constituées en tant que supports de roue, les bras médians et les bielles formant deux parallélogrammes articulés identiques,
- une jambe élastique qui s'appuie sur un des bras médians et sur le té supérieur de fourche,
- les bras médians supérieur et inférieurs étant disposés à peu près perpendiculairement aux branches de fourche et la jambe élastique étant dans la tête de direction concentrique à l'axe de rotation de direction et en appui sur le bras supérieur.

Selon la technologie décrite dans les documents EP 1 270 391 ou EP 1 104 738, du fait de l'agencement de la jambe amortisseur dans la colonne de direction, les bras médians supérieur et inférieurs sont nécessairement disposés en arrière des bielles et au-dessous du té de fourche inférieur. Cette technologie présente les inconvénients de la présence de masses élevées non suspendues, et d'un encombrement de l'espace compris entre le té de fourche inférieur et la roue avant ; en outre, les branches de fourches sont relativement longues ce qui limite les possibilités d'agencement de l'étrier de freinage.

La présente invention a pour objectif de pallier ces inconvénients. Plus précisément, l'invention se rapporte à un dispositif de train avant de véhicule tel que défini plus haut, caractérisé en ce que lesdits au moins un bras médian supérieur et inférieur articulés s'étendent en avant dudit au moins un bras supérieur de fourche.

La solution de l'invention qui maintient l'utilisation de tés de fourche et d'une colonne de direction, c'est-à-dire l'utilisation d'une « partie cycle » avant traditionnelle, tout en proposant une suspension à parallélogramme abaissé vers la roue et avantageusement au plus près de celle-ci, par exemple sensiblement au niveau du pneumatique, offre ainsi une suspension compacte en minimisant la masse non suspendue. On obtient ainsi un abaissement du centre de gravité du système de suspension, qui rejoint vers le bas le centre de gravité du véhicule, par exemple d'une moto. Le dispositif selon l'invention permet ainsi de respecter la stabilité de la moto, offrant en cela un avantage devant les fourches à parallélogramme de l'art antérieur. En outre, la disposition en avant combinée des bras médians permet de dégager l'espace entre le té de fourche inférieur et le pneumatique avant, ce qui garantit avantageusement un débattement de la suspension avant de type conventionnel, et également un passage central correct pour un flux d'air de refroidissement du moteur disposé derrière le train avant. D'autres avantages sont obtenus à partir de particularités définies ci-dessous. Grâce à son aptitude à être monté sur une colonne de direction conventionnelle, le dispositif de train avant selon l'invention peut être adapté pour remplacer des dispositifs de train avant montés sur des véhicules existants, après agrément de la transformation auprès des services compétents, si nécessaire.

Selon une caractéristique avantageuse, les axes d'articulation desdits au moins un bras médian supérieur et bras médian inférieur, sur ledit au moins un bras supérieur de fourche, sont disposées au-dessous du té de fourche inférieur.

Ainsi, l'intégralité des bras médians constitutifs du parallélogramme déformable est située sous le té inférieur et en avant du ou des bras supérieurs de fourche, réduisant au mieux la masse non suspendue du train avant.

Selon une caractéristique avantageuse, les moyens de suspension comprennent au moins un amortisseur, de type à gaz ou à ressort, disposé en avant dudit au moins un bras supérieur de fourche, et dont une extrémité inférieure est liée au dit au moins un bras médian supérieur.

Cette caractéristique qui dégage les moyens de suspension en avant des bras supérieurs de fourche, tout en faisant coopérer ces derniers avec le bras médian supérieur, offre une grande liberté de positionnement de l'attache inférieure du ou des amortisseurs, permettant ainsi d'allonger ces derniers en vue de modifier la loi d'amortissement en offrant par exemple une course d'amortissement optimisée, avantageusement de l'ordre de la moitié du débattement de la suspension avant.

Selon une caractéristique avantageuse de la précédente :
- ledit au moins un bras médian supérieur est unique de type monobloc, et
- ledit amortisseur de suspension est unique et disposé dans le plan de la roue avant unique.

Selon une caractéristique avantageuse de la précédente l'extrémité supérieure dudit amortisseur de suspension unique est liée dans la zone du té de fourche supérieur.

Ces caractéristiques offrent une très bonne compacité du dispositif de train avant selon l'invention, en raison du fait de l'agencement combiné du parallélogramme au-dessous du té inférieur de fourche, l'amortisseur s'étendant à l'avant des bras supérieurs de fourche et donc de la colonne de direction, avantageusement entre le té supérieur de fourche et le bras médian supérieur.

Selon une caractéristique avantageuse, l'axe d'articulation dudit au moins un bras médian supérieur sur ledit au moins un bras inférieur, est adjacent à la bande de roulement de la roue avant unique.

Cette caractéristique permet de minimiser les masses non suspendues que constituent les bras inférieurs de fourche en réduisant leur longueur au minimum soit sensiblement la longueur du rayon de la roue avant, lorsque le bras médian supérieur est monobloc avec une partie de celui-ci joignant les bras inférieurs de fourches droit et gauche ; en outre, elle permet le montage d'un carénage de manière conventionnelle : ceci est dû au dégagement de l'espace situé au-dessus du parallélogramme, permettant ainsi le positionnement d'un carénage d'encombrement conventionnel.

Selon une caractéristique avantageuse, le bras médian supérieur unique adopte une forme de U dont les extrémités libres des branches du U sont articulées sur les parties inférieures des bras supérieurs, au-dessous du té inférieur de fourche, et dont la base du U est articulée aux extrémités supérieures des bras inférieurs de fourche.

Cette caractéristique offre une structure optimisée pour un bras médian supérieur unique permettant de conférer une bonne rigidité à la suspension tout en offrant la possibilité d'un amortisseur de suspension unique en prise avec la base du U qui joint les partie droite et gauche de la suspension.

Selon une caractéristique avantageuse, deux bras supérieurs de fourche, droite et gauche, sont fixés aux deux extrémités latérales droite et gauche des deux tés de fourche supérieur et inférieur, respectivement, et dans lequel deux bras inférieurs de fourche, droite et gauche, disposés de part et d'autre de la roue avant unique, sont liés respectivement aux dits deux bras supérieurs de fourche par ladite liaison à parallélogramme déformable, qui comprend un bras médian supérieur unique, de type monobloc, et deux bras médians inférieurs dissociés droite et gauche.

Cette caractéristique propose un dispositif de train avant avantageusement symétrique par rapport au plan de la roue, et de l'axe de direction, afin d'équilibrer les efforts auxquels est soumis le train avant.

Selon une caractéristique avantageuse, lesdits deux bras médians inférieurs dissociés droite et gauche, sont disposés respectivement de part et d'autre de la roue avant unique et selon une autre caractéristique avantageuse, les articulations situées aux deux extrémités desdits bras médians inférieurs droit et gauche dissociés, sont disposées respectivement du côté droit et du côté gauche de la roue avant unique, une projection des articulations du bras médian inférieur droit sur les articulations du bras médian inférieur gauche suivant une direction parallèle à l'axe de rotation de la roue avant, interceptant cette dernière.

Cette caractéristique, prise en combinaison avec un bras médian supérieur dont l'axe d'articulation avant est adjacent à la bande de roulement de la roue avant, offre une compacité maximale au dispositif de train avant selon l'invention.

Selon une caractéristique avantageuse, le dispositif de train avant selon l'invention comporte en outre des moyens de réglage de la distance entre les articulations dudit au moins un bras médian supérieur et dudit au moins un bras médian inférieur sur ledit au moins un bras supérieur de fourche, d'une part, et le té de fourche inférieur d'autre part.

Cette caractéristique permet un réglage de la distance entre le té de fourche inférieur et l'axe de la roue avant, un tel réglage étant possible indépendamment du réglage de l'amortissement. La position du parallélogramme déformable de suspension au-dessous du té de fourche inférieur autorise un tel réglage, le parallélogramme déformable étant dissocié des tés de fourche.

Selon une caractéristique avantageuse, ledit au moins un bras supérieur de fourche adopte une forme cylindrique, en prise dans les tés de fourche supérieur et inférieur, et dont la position de fixation par rapport à ces derniers est réglable le long d'une partie au moins de la forme cylindrique.

Cette caractéristique permet un réglage de la distance entre le té de fourche inférieur et l'axe de la roue avant, avec déplacement du bras supérieur de fourche par rapport aux tés de fourche.

Selon une caractéristique avantageuse, la forme cylindrique dudit au moins un bras supérieur de fourche adopte une section transversale circulaire, en prise par serrage dans deux logements formés dans les deux tés de fourche supérieur et inférieur, respectivement, dont la section est complémentaire de la section transversale circulaire du bras supérieur de fourche.

Cette caractéristique est une caractéristique connue d'un train avant à fourche télescopique conventionnel, et procure une interface possible avec des dispositifs de trains avant déjà montés sur des véhicules existants.

Selon une caractéristique avantageuse, l'extrémité supérieure dudit amortisseur de suspension unique est liée au té supérieur de fourche selon une liaison comportant au moins un degré de liberté en translation autorisant une position réglable de ladite extrémité supérieure de l'amortisseur par rapport au té de fourche supérieur.

Cette caractéristique permet de modifier l'assiette du véhicule sans modifier l'amortissement.

L'invention se rapporte également à un véhicule caractérisé en ce qu'il comprend un dispositif de train avant selon l'invention.

Selon une caractéristique avantageuse, lesdits au moins un bras médian supérieur et au moins un bras médian inférieur, sont respectivement disposés dans deux plans sensiblement parallèles et horizontaux lorsque ledit dispositif de train avant est placé dans une position à l'arrêt en charge du poids du véhicule, dite position de repos du dispositif de train avant.

Selon une caractéristique avantageuse, ledit au moins un bras inférieur de fourche, est disposé dans un plan sensiblement vertical passant par l'axe de rotation de la roue avant, lorsque ledit dispositif de train avant est placé dans une position à l'arrêt en charge du poids du véhicule, dite position de repos du dispositif de train avant.

Selon une caractéristique avantageuse, ledit au moins un bras supérieur de fourche adopte une forme cylindrique, en prise dans les tés de fourche supérieur et inférieur, et dont la position de fixation par rapport à ces derniers est réglable en hauteur afin de régler l'assiette du véhicule.

Selon une caractéristique avantageuse, ledit au moins un bras supérieur de fourche, ledit au moins un bras inférieur de fourche, et lesdits au moins un bras médian supérieur et au moins un bras médian inférieur, sont agencés via l'agencement de leurs articulations définissant ledit système à parallélogramme déformable, de telle sorte que :
- ledit dispositif de train avant soit mobile entre deux positions extrêmes :
   - une première position dite de détente, et
   - une deuxième position dite de compression, et que
- l'empattement du véhicule soit sensiblement constant lors du débattement du dispositif de train avant entre les deux dites positions extrêmes.

D'autres caractéristiques apparaîtront à la lecture qui suit d'un exemple de mode de réalisation d'un train avant et d'un véhicule selon l'invention, accompagnée des dessins annexés, exemple donné à titre illustratif non limitatif.
La figure 1 représente une vue de côté d'un exemple de mode de réalisation d'un dispositif de train avant selon l'invention.
La figure 2 représente une vue en perspective avant et de dessus de l'exemple de la figure 1.
La figure 3 représente une autre vue en perspective avant et de dessus de l'exemple de la figure 1.
La figure 4 représente une vue en perspective arrière et de dessous de l'exemple de la figure 1.
Les figures 5a, 5b, 5c représentent trois vues de côté de l'exemple selon la figure 1, respectivement en position de butée de détente, en position de butée de compression, et en position normale.
La figure 6 représente une vue en perspective avant et de dessus du train avant de la figure 1 sans la roue.
La figure 7 représente une vue en perspective latérale et de dessus du train avant de la figure 1 sans la roue.
La figure 8 représente de manière schématique une vue de côté d'un exemple de mode de réalisation d'un véhicule selon l'invention comportant un dispositif de train avant selon la figure 1.

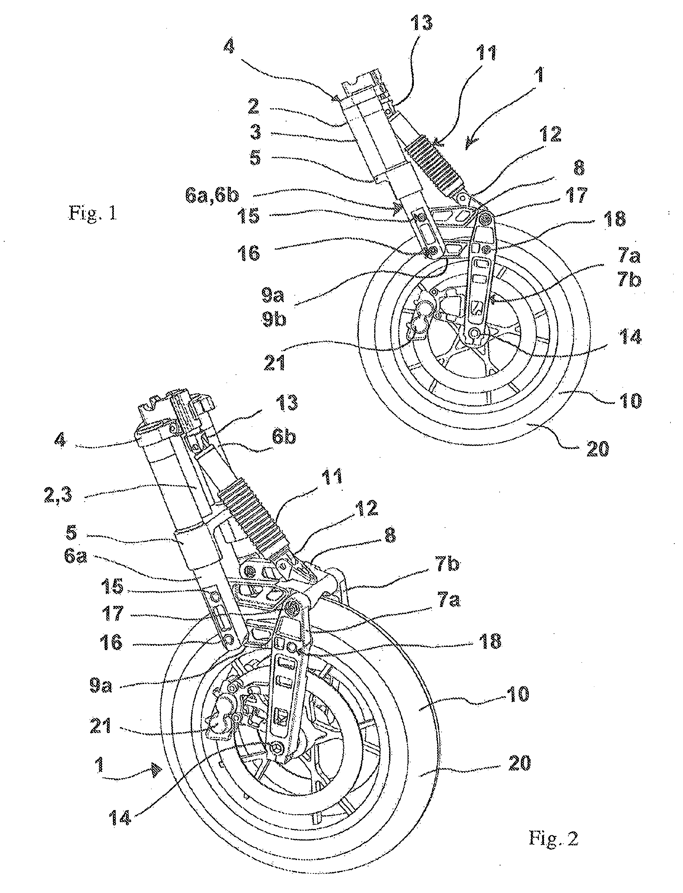

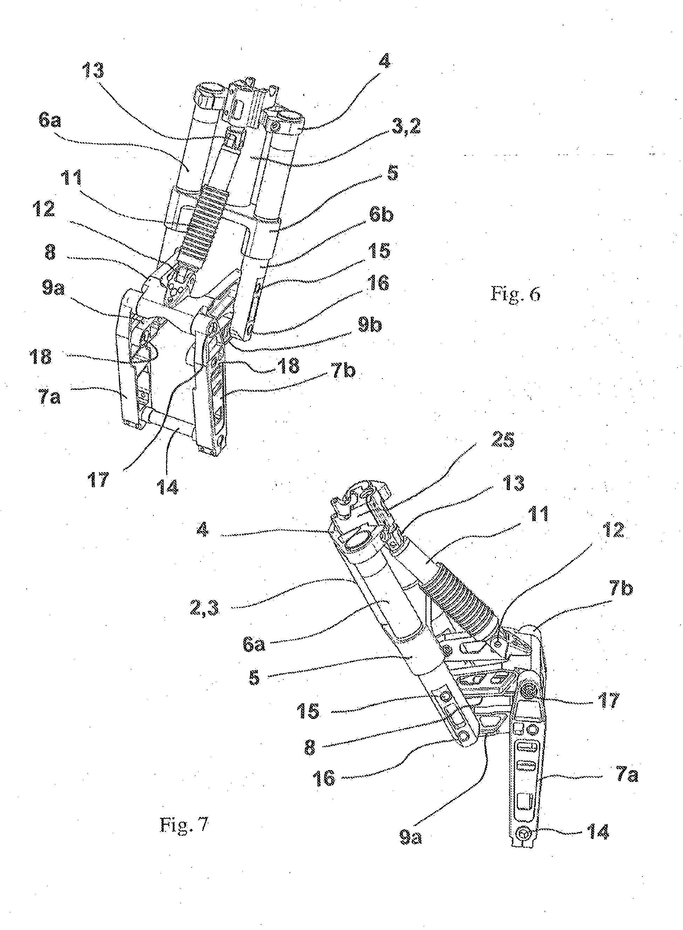

Le dispositif 1 de train avant de véhicule représenté sur les figures 1 à 5, partiellement sur les figures 6 et 7, est plus particulièrement destiné à un véhicule de type deux roues, par exemple une moto. Il comporte :
- un axe de direction 2, apte à être lié à une colonne de direction 3 du châssis du véhicule selon une liaison comportant un degré de liberté en rotation,
- un té de fourche supérieur 4 lié à l'axe de direction 2,
- un té de fourche inférieur 5 lié à l'axe de direction 2,
- avantageusement deux bras supérieurs 6a, 6b de fourche, droite et gauche, fixés sur les tés de fourche supérieur 4 et inférieur 5,
- avantageusement deux bras inférieurs 7a, 7b de fourche, droite et gauche, liés respectivement aux deux bras supérieurs 6a, 6b de fourche, au moyen d'une liaison de type parallélogramme déformable, par l'intermédiaire avantageusement d'un bras médian supérieur 8 et de deux bras médians inférieurs 9a, 9b, articulés à leurs deux extrémités respectives sur les deux bras supérieurs 6a, 6b de fourche et sur les deux bras inférieurs 7a, 7b de fourche, respectivement,
- une roue avant 10 directrice unique, montée rotative, en chape sur les deux bras inférieurs 7a, 7b de fourche,
- les bras médians supérieur 8 et inférieur 9a, 9b articulés étant disposés au-dessous du té de fourche inférieur 5, et notamment dans l'exemple intégralement au-dessous quelle que soit la position de ces bras,
- des moyens de suspension 11 conférant une liaison élastique amortie entre les bras inférieurs 7a, 7b de fourche et les bras supérieur 6a, 6b de fourche.

L'axe de direction 2 peut être un axe de direction conventionnel. Les tés de fourche supérieur 4 et inférieur 5 peuvent également être des tés de fourche de type conventionnel, et le montage de ces tés 4, 5, de fourche avec l'axe de direction 2 dans une colonne de direction 3 du châssis d'un véhicule, selon une liaison comportant un degré de liberté en rotation, peut également être de type conventionnel, par exemple comme représenté, sauf description contraire ci-dessous. Ces éléments ne seront donc pas décrits plus en détail ici, et l'homme du métier se reportera à ces techniques connues pour leur mise en oeuvre.

Les deux bras supérieurs 6a, 6b de fourche, droite et gauche, peuvent par exemple être constitués de deux tubes rectilignes de fourches fixés respectivement de manière latérale droite et gauche sur les deux tés de fourche supérieur 4 et inférieur 5 superposés. La partie supérieure des bras supérieurs 6a, 6b de fourche, en prise dans les tés de fourche 4, 5, peut par exemple être également de type conventionnel avec des tubes supérieurs de fourche engagés et serrés dans des logements latéraux correspondants des tés, pour être fixés à ces derniers par serrage au moins. Comme cela sera expliqué plus en détail plus loin, la position des bras supérieurs 6a, 6b de fourche par rapport aux tés 4, 5 sera avantageusement réglable.

Sur la partie inférieure des deux bras supérieurs 6a, 6b de fourche, au-dessous du té inférieur 5 de fourche, sont articulés les bras médians supérieur 8, et inférieurs 9a, 9b, de telle sorte que les axes d'articulation 15, 16, correspondant de ces bras médians soient disposés au-dessous du té de fourche inférieur 5, comme représenté sur les figures. Dans l'exemple représenté, les articulations 17 et 18 des bras médians 8, 9a, 9b sur les bras inférieurs 7a, 7b de fourche, qui sont mobiles par rapport aux bras supérieurs 6a, 6b de fourche, sont également situées au-dessous du té de fourche inférieur 5, quelle que soit la position de débattement de la fourche à parallélogramme.

Dans l'exemple représenté, de manière avantageuse, deux bras supérieurs de fourche, droite 6a et gauche 6b, sont fixés aux deux extrémités latérales droite et gauche des deux tés de fourche supérieur 4 et inférieur 5, respectivement, et deux bras inférieurs de fourche, droite 7a et gauche 7b, disposés de part et d'autre de la roue avant 10 unique, sont liés respectivement aux deux bras supérieurs 6a, 6b de fourche par la liaison à parallélogramme déformable, qui comprend un bras médian supérieur 8 unique, de type monobloc, et deux bras médians inférieurs dissociés droite 9a et gauche 9b. Les deux bras médians inférieurs dissociés, droite 9a et gauche 9b, sont disposés respectivement de part et d'autre de la roue avant 10 unique, et dans l'exemple, sensiblement en vis-à-vis du pneumatique 20 de la roue avant 10.

Comme représenté sur les figures, les articulations 16, 18 situées aux deux extrémités des bras médians inférieurs droit 9a et gauche 9b dissociés, sont avantageusement disposées respectivement du côté droit et du côté gauche de la roue avant 10 unique, soit dans l'exemple dans la zone supérieure du pneumatique 20 et de part et d'autre de celui-ci, une projection des articulations 16, 18 du bras médian inférieur droit 9a sur les articulations 16, 18 du bras médian inférieur gauche suivant une direction parallèle à l'axe 14 de rotation de la roue avant 10, interceptant cette dernière.

Les bras médians 8, 9a, 9b sont articulés de toutes manières connues sur les bras de fourche supérieurs 6a, 6b et inférieurs 7a, 7b, respectivement selon des articulations à un degré de liberté en rotation suivant des axes parallèles entre eux pour former le parallélogramme déformable, et parallèle à l'axe de rotation de la roue avant 10. Les articulations 15, 16, 17, 18 peuvent prendre la forme respective de palier lisse, ou à aiguilles, à rouleaux ou à billes.

Les articulations 15, 16 des bras médians 8, 9a, 9b sur la partie inférieure des bras supérieurs 6a, 6b de fourches sont alignées le long des bras supérieurs de fourche, les articulations 16 des bras médians inférieurs 9a, 9b étant sensiblement situées à l'extrémité inférieure des bras 6a, 6b, respectivement, et les articulations 15 du bras médian supérieur 8 étant sensiblement situées au-dessus des articulations 16.

Le bras médian supérieur 8 adopte avantageusement dans l'exemple une forme de U dont les extrémités libres des branches du U sont articulées en 15 sur les parties inférieures des bras supérieurs 6a, 6b, au-dessous du té inférieur 5 de fourche, et dont la base du U est articulée en 17 aux extrémités supérieures des bras inférieurs de fourche 7a, 7b, comme montré sur les figures.

Les bras médians inférieurs 9a, 9b, adoptent chacun la forme d'un élément oblong de type levier, sensiblement rectiligne et de longueur voisine de celle d'une branche du U constitué par le bras médian supérieur 8, l'élément oblong de type levier étant articulé à ses deux extrémités libres en 16 et 18. Les deux bras médians inférieurs 9a, 9b sont assemblés sur les bras de fourches 6a, 6b, 7a, 7b pour former le parallélogramme déformable de suspension du train avant, sensiblement de manière parallèle aux deux branches du U constitué par le bras médian supérieur 8. Les deux bras médians inférieurs 9a, 9b peuvent être identiques, ou symétriques par rapport à un plan de symétrie de la roue avant 10, passant par cette dernière.

Les bras inférieurs 7a, 7b adoptent avantageusement chacun une forme allongée à l'extrémité inférieure de laquelle l'axe de rotation 14 de la roue 10 avant est fixé, et à l'extrémité supérieure de laquelle est articulée la base du U constitué par le bras médian supérieur 8. Les articulations 18 de l'extrémité des bras médians inférieurs 9a, 9b sur les bras inférieurs 7a, 7b de fourche, respectivement, sont situées avantageusement au-dessous de l'articulation 17 de la base du U constitué par le bras médian supérieur 8. La longueur de chaque bras inférieur 7a, 7b de fourche est dans l'exemple sensiblement égale au rayon de la roue, plus précisément légèrement supérieure à celui-ci.

Le bras médian supérieur 8, les bras médians inférieurs 9a, 9b, et les bras inférieurs 7a, 7b de fourche peuvent être fabriqués en métal ou matière synthétique rigide renforcée appropriée (fibres de carbone ou analogue), selon tous moyens connus, par exemple par forgeage, usinage, moulage ... La roue avant 10 est montée rotative en chape à l'extrémité inférieure des bras inférieurs de fourche 7a, 7b et entre ces derniers, selon tous moyens connus, par exemple à l'instar du montage d'une roue avant à l'extrémité d'une fourche télescopique, qui ne seront donc pas décrits plus avant ici.

Le dispositif 1 de train avant représenté présente l'avantage de permettre un démontage de la suspension avant complète sans dissocier le parallélogramme déformable, soit sans dévisser les articulations 15, 16, 17, 18.

Le dispositif de train avant représenté sur les figures comprend un système à double ou simple frein à disque, de type conventionnel, dont les étriers 21 de frein sont avantageusement fixés aux bras inférieurs de fourche 7a, 7b, comme représenté, par exemple sur la face arrière des bras 7a, 7b, le ou les disques étant fixés latéralement sur la roue 10 entre les bras inférieurs de fourche 7a, 7b. Sur un train avant conventionnel à fourche télescopique, il n'y a plus d'amortissement lors des freinages entraînant un talonnage de la fourche. Avec le dispositif de train avant décrit, il y a peu de plongée de la fourche au freinage, en raison du système à parallélogramme, un tel dispositif 1 de train avant faisant office de système anti-plongée par rapport à une moto conventionnelle équipée d'une fourche télescopique ; il s'en suit un confort accru avec l'utilisation d'un dispositif 1 de train avant décrit.

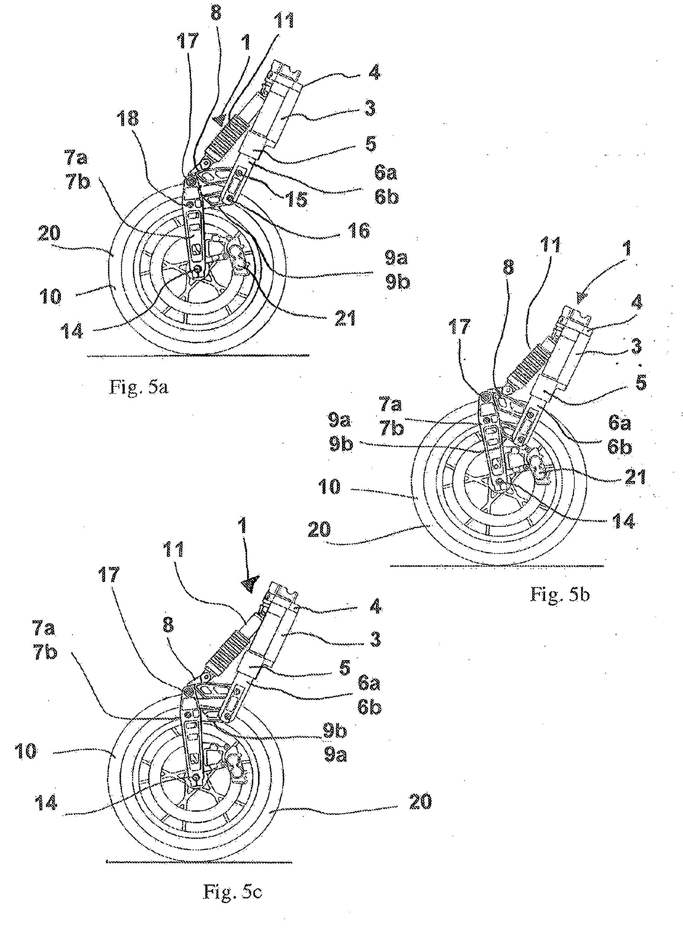

Les bras supérieurs 6a, 6b de fourche s'étendent avantageusement au-dessous du té 5 inférieur de fourche selon une longueur minimale, dans l'exemple environ jusqu'au diamètre extérieur de la jante avant qui supporte le pneumatique avant, en position normale de fonctionnement, définie par un train avant au repos et en charge du poids du véhicule, comme représenté sur la figure 5c. Ainsi, un espace circonférentiel maximal est libéré à partir de l'axe de roue pour le débattement des étriers de freins avant, comme représenté sur les figures 5a à 5c.

De manière avantageuse, le dispositif 1 de train avant représenté comporte en outre des moyens de réglage de la distance entre les articulations 15, 16 du bras médian supérieur 8 et des bras médians inférieurs 9a, 9b, respectivement, sur les bras supérieurs 6a, 6b de fourche, d'une part, et le té de fourche inférieur 5 d'autre part. À cet effet, selon un mode de réalisation représenté, les bras supérieurs 6a, 6b de fourche adoptent une forme cylindrique, en prise dans les tés de fourche supérieur 4 et inférieur 5, et dont la position de fixation par rapport à ces derniers est réglable le long d'une partie au moins de la forme cylindrique.

Dans l'exemple représenté, la forme cylindrique des bras supérieurs 6a, 6b de fourche adopte une section transversale circulaire, en prise par serrage dans deux logements formés dans les deux tés de fourche supérieur 4 et inférieur 5, respectivement, dont la section est complémentaire de la section transversale circulaire du bras supérieur 6a, 6b de fourche, selon tous moyens connus, par exemple à l'instar de la fixation des tubes de fourche d'une fourche télescopique.

Le réglage de la distance entre les articulations 15, 16 et le té inférieur 5 de fourche, et de manière incidente de la distance de l'axe 14 de la roue avant 10 au té inférieur de fourche permet le réglage de l'assiette du véhicule sans modifier le réglage de l'amortissement, comme cela sera également expliqué plus loin avec la description d'un exemple de mode de réalisation d'un véhicule selon l'invention. D'autres mises en oeuvre de ce réglage sont possibles, par exemple au moyen de réglages directs de la position des axes d'articulation 15, 16 le long des bras supérieurs de fourche 6a, 6b, ces derniers étant alors montés fixes et non réglables sur les tés 4, 5 de fourche.

Comme représenté sur les figures, les moyens de suspension comprennent avantageusement un combiné ressort/amortisseur 11, unique, ci-après amortisseur, et disposé dans le plan de la roue 10 avant, de type à gaz ou à ressort, disposé en avant des bras supérieurs 6a, 6b de fourche, et dont une extrémité inférieure 12 est liée au bras médian supérieur 8, plus précisément dans l'exemple à la base du U formé par ce dernier. Selon un tel agencement, la course d'amortissement de l'amortisseur 11 unique peut être de l'ordre de la moitié du débattement de la suspension avant qui est, quant à lui, avantageusement standard pour une application routière, soit égal à environ 110 mm.

L'extrémité supérieure 13 de l'amortisseur 11 de suspension est avantageusement liée dans la zone du té supérieur 4 de fourche, dans l'exemple sur le té supérieur 4 lui-même. De manière avantageuse, l'extrémité supérieure 13 de l'amortisseur 11 de suspension unique est liée au té supérieur 4 de fourche selon une liaison comportant au moins un degré de liberté en translation autorisant une position réglable de l'extrémité supérieure 13 de l'amortisseur 11 par rapport au té de fourche supérieur 4. Dans l'exemple représenté, le degré de liberté en translation pour le réglage de l'extrémité supérieure 13 de l'amortisseur 11 est parallèle ou sensiblement parallèle à un axe de réglage de la position des articulations 15, 16 par rapport au té de fourche inférieur 5, dans l'exemple par rapport à l'axe longitudinal de la forme cylindrique des bras supérieurs 6a, 6b de fourche. Dans l'exemple, ces axes de réglage sont parallèles à l'axe de direction. Un autre mode de fixation réglable (non représenté) de l'extrémité supérieure 13 de l'amortisseur 11 consisterait à lier celle-ci sur une platine elle-même fixée sur les bras de fourche supérieur 6a, 6b entre les tés supérieur 4 et inférieur 5 de fourche, selon une fixation autorisant une possibilité de coulisser afin de régler la hauteur de blocage de ladite platine entre les tés de fourche. L'extrémité supérieure 13 de l'amortisseur 11 est liée par une articulation à ladite platine de manière conventionnelle pour une liaison d'amortisseur.

Les extrémités, supérieure 13 et inférieure 12, de l'amortisseur 11 sont, de manière connue, montées pivotantes selon des axes parallèles aux axes d'articulation 15, 16, 17, 18 du parallélogramme déformable.

L'agencement et les attaches de l'amortisseur 11 tels que décrits offrent un débattement de l'amortisseur démultiplié par rapport au mouvement de la roue avant 10 ; le débattement de l'amortisseur 11 est en effet réduit par rapport à celui de la roue 10, entraînant une réduction de la vitesse notamment d'enfoncement de l'amortisseur, et ainsi une réduction de la température de fonctionnement du liquide amortisseur limitant le phénomène d'émulsion.

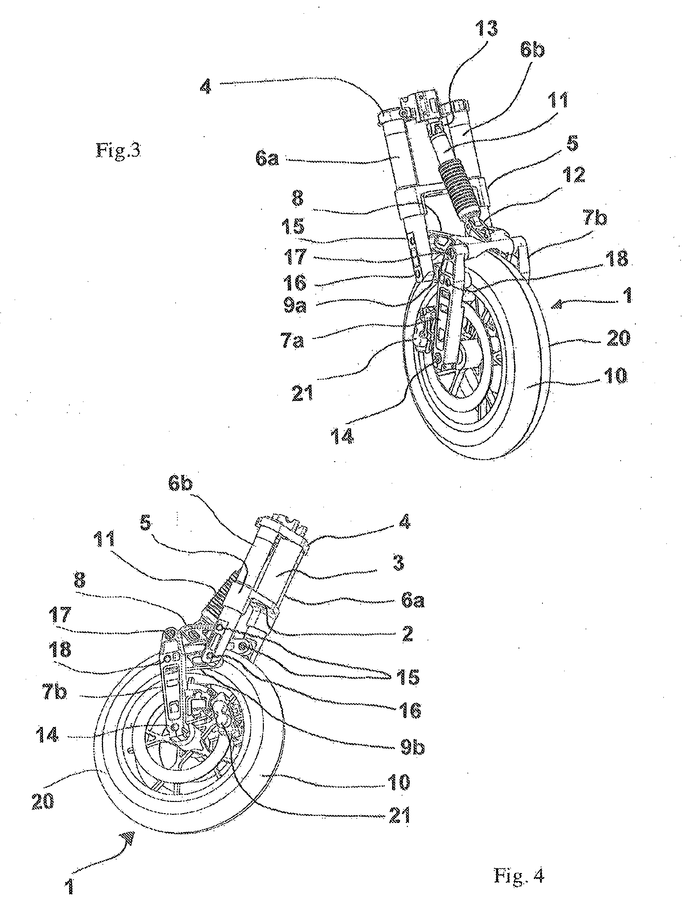

Dans l'exemple représenté, l'axe d'articulation 17 du bras médian supérieur 8 sur les bras inférieurs 7a, 7b, de fourche est adjacent à la bande de roulement de la roue avant unique 10, de telle sorte qu'un dégagement épousant le profil transversal du pneumatique 20 peut être formé sur la base du U constitutif du bras médian supérieur 8, côté roue, afin de dégager un espace libre minimum de sécurité entre le bras médian 8 et le pneumatique 20, par exemple comme représenté sur la figure 3 ou 2.

Dans l'exemple représenté, les bras médians supérieur 8 et inférieurs 9a, 9b sont disposés entre les bras de fourche supérieurs 6a, 6b, et inférieurs 7a, 7b, ces derniers étant deux à deux sensiblement alignés dans deux plans parallèles au plan médian du train avant passant par la roue 10.

Un guidon (non représenté) est fixé de manière conventionnelle sur le té de fourche supérieur 4. À cet effet, la platine 25 de fixation du guidon, peut comporter l'attache réglable de l'extrémité supérieure de l'amortisseur 11 comme représenté sur les figures.

Les figures 5a, 5b, 5c représentent trois positions du dispositif 1 de train avant, dont deux en butée de fonctionnement, détente (figure 5a) et compression (figure 5b). Ces figures montrent les déformations extrêmes du parallélogramme déformable constitutif de la suspension du train avant représenté. La butée de compression du parallélogramme déformable peut être conférée par la butée d'enfoncement de l'amortisseur 11. La butée de détente du parallélogramme déformable peut être conférée par la butée de détente de l'amortisseur. On remarque sur la figure 5b que les branches du U constitutif du bras médian supérieur 8 et les bras médians inférieurs 9a, 9b sont sensiblement intégralement situées à l'intérieur de la circonférence extérieure du pneumatique 20. En position de détente, les bras médians inférieurs 9a, 9b restent intégralement situées à l'intérieur de cette circonférence extérieure du pneumatique 20. En position normale de fonctionnement, définie par un train avant au repos et en charge du poids du véhicule, les bras médians 8, 9a, 9b, sont, dans l'exemple, horizontaux ou sensiblement horizontaux, comme représenté sur la figure 5c.

La géométrie du train avant, conférée au moins en partie par les bras médians et inférieurs de fourche et leurs articulations 15, 16, 17, 18, est définie selon les besoins. L'angle de chasse est de manière conventionnelle, donné par l'inclinaison de l'axe de direction par rapport à la verticale, l'axe de direction étant parallèle à l'axe longitudinal des bras supérieurs de fourche 6a, 6b. On peut donner un déport ou pas de déport à l'axe de rotation 14 de la roue avant 10, en position normale de fonctionnement représentée sur la figure 5c. À cet effet, les bras supérieurs 6a, 6b, les bras médians 8, 9a, 9b, et les bras inférieurs 7a, 7b de fourche, sont par exemple agencés de telle sorte que l'axe de rotation 14 de la roue avant 10 soit situé dans le plan de prolongement de l'axe longitudinal des bras supérieurs de fourche (pas de déport), ou soit situé en avant du plan de prolongement de l'axe longitudinal des bras supérieurs de fourche (déport).. Le débattement du parallélogramme déformable définit une trajectoire de l'axe de rotation 14 de la roue avant 10, à partir de la position de repos, vers la position en butée de compression, et vers la position en butée de détente, déterminée selon les besoins. Le déport du dispositif de train avant décrit peut varier tout au long du débattement de la fourche, selon la cinématique choisie des éléments constitutifs; Les bras supérieurs 6a, 6b, les bras médians 8, 9a, 9b, et les bras inférieurs 7a, 7b de fourche, seront avantageusement agencés de telle sorte que le débattement total de la fourche soit de l'ordre de 110 mm, soit un débattement sensiblement standard. Les paramètres existants de train avant d'un véhicule existant peuvent être reproduit avec le dispositif de train avant décrit, en sorte de permettre l'adaptation de ce dernier sur un véhicule existant. En particulier, l'angle de châsse et la châsse peuvent adopter des valeurs conventionnelles.

Les figures 6 et 7 montrent le train avant des figures 1 à 5 sans la roue et sans les systèmes de freinage. Il est à noter que le train avant partiel représenté sur ces figures peut être monté en adaptable sur des véhicules existants en réutilisant la roue avant d'origine, et dans certains cas, pour un véhicule existant à fourche télescopique par exemple, les tés de fourche avec l'axe de direction peuvent également être réutilisés, en proposant des bras supérieurs 6a, 6b de fourche de remplacement compatibles avec une fixation aux tés d'origine du véhicule. Il en est de même pour l'axe de rotation de la roue avant.

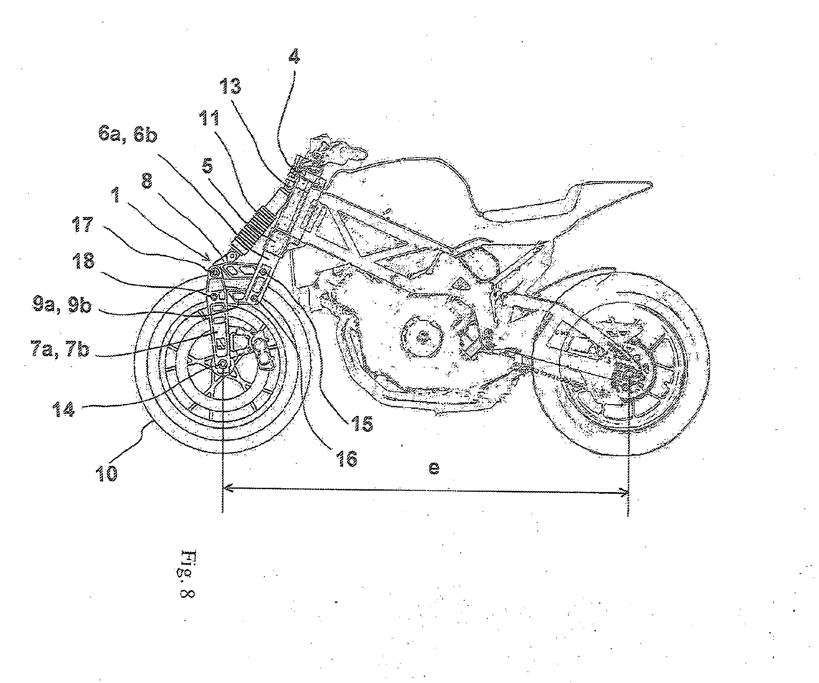

La figure 8 représente de manière schématique un exemple de moto selon l'invention sur laquelle est monté l'exemple de mode de réalisation du dispositif 1 de train avant selon l'invention, tel que décrit plus haut à l'aide des figures 1 à 7. Le restant constitutif de la moto représentée est de type connu. La moto est représentée en position de repos, soit à l'arrêt en charge de son poids, le dispositif de train avant étant dans la même position que sur la figure 5c.

Comme représenté sur la figure 8, les bras médians supérieur 8 et inférieurs 9a, . 9b s'étendent en avant des bras supérieurs 6a, 6b de fourche, de telle sorte que les bras inférieurs 7a, 7b soient disposés en avant des bras supérieurs 6a, 6b de fourche. En outre, dans l'exemple de véhicule représenté, on constate sur la figure 8 que le bras médian supérieur 8 et les deux bras médians inférieurs 9a, 9b, sont respectivement disposés dans deux plans sensiblement parallèles et horizontaux lorsque le dispositif 1 de train avant est placé dans une position à l'arrêt en charge du poids du véhicule, dite position de repos du dispositif de train avant.

Comme représenté sur la figure 8, dans l'exemple, les bras inférieurs 7a, 7b de fourche, ou plus précisément les axes longitudinaux desdits bras inférieurs, sont disposés dans un plan sensiblement vertical passant par l'axe 14 de rotation de la roue avant 10, lorsque le dispositif 1 de train avant est placé dans la position de repos du véhicule définie plus haut. Sur la figure 8, ce plan est légèrement incliné vers l'avant à partir de l'axe de roue avant.

Sur les figures 1, 5a-5c, et 8, en vue de côté, on constate que le train avant définit avantageusement un triangle sensiblement isocèle, dont la base est constituée en partie des bras supérieurs 6a, 6b de fourche, et les deux côtés des bras inférieurs 7a, 7b de fourche et du combiné amortisseur 11, respectivement, le parallélogramme déformable reliant dans son ensemble la zone de sommet du triangle à une zone médiane de la base. Lors du débattement de la suspension avant, ce triangle reste sensiblement isocèle avec une base de longueur variable, comme représenté sur els figures 5a à 5c.

Les moyens de réglage de la distance entre les articulations 15, 16 respectivement du bras médian supérieur 8 et des bras médians inférieurs 9a, 9b sur les bras supérieurs 6a, 6b de fourche, d'une part, et le té de fourche inférieur 5 d'autre part, tels que décrits plus haut, permettent avantageusement de régler l'assiette du véhicule. En utilisant le réglage combiné de la position de l'extrémité supérieure 13 de l'amortisseur 11, également tel que décrit plus haut, ce réglage de l'assiette du véhicule peut se faire sans modifier l'amortissement, et permet ainsi de conserver le réglage d'amortissement lors du changement d'assiette du véhicule.

De manière avantageuse, les bras supérieurs 6a, 6b de fourche, les bras inférieurs 7a, 7b de fourche, et le bras médian supérieur 8 ainsi que les bras médians inférieurs 9a, 9b, sont agencés via l'agencement de leurs articulations 15, 16, 17, 18 définissant le système à parallélogramme déformable, de telle sorte que :
- le dispositif 1 de train avant soit mobile entre deux positions extrêmes :
   - une première position dite de détente, telle que représenté sur la figure 5a, et
   - une deuxième position dite de compression, telle que représenté sur la figure 5b, et que
- l'empattement e du véhicule soit sensiblement constant lors du débattement du dispositif 1 de train avant entre ces deux positions extrêmes.

En effet, sur une fourche télescopique traditionnelle, lors du débattement de la fourche, l'empattement du véhicule varie car ce débattement se fait suivant la direction de l'inclinaison des tubes de fourche fixés aux tés de fourche. Ainsi, l'axe de rotation de la roue avant étant fixé à l'extrémité inférieure de la fourche, lorsque la fourche se détend, l'empattement augmente, et lorsque la fourche se comprime, l'empattement se réduit ; il s'en suit une tenue de route aléatoire du véhicule lors de ce débattement de la fourche, d'autant plus dangereuse lorsqu'elle se produit en virage. Avec le dispositif 1 de train avant selon l'invention, comme représenté sur les figures 5, le débattement de l'axe de rotation 14 de la roue avant 10 se fait avantageusement au moins en partie suivant un plan sensiblement vertical du fait de l'agencement décrit des éléments constitutifs du train avant ; ainsi, l'empattement e du véhicule varie peu ou pas suivant le débattement du train avant, et est sensiblement constant à 98% de sa valeur de référence (position de repos) ; il en découle une tenue de route améliorée du véhicule, notamment une plus grande stabilité de la moto en courbe en accélération ou en décélération.

De manière alternative, il est également possible de reproduire un empattement e variable, sur l'amplitude du débattement de la fourche, par exemple à l'instar de celui d'une fourche télescopique traditionnelle, comme expliqué plus haut, soit à la conception, soit par un montage des articulations 15, 16, 17, 18 sur des excentriques par exemple (non représentés), et un réglage approprié de ces derniers en fonction de la trajectoire recherchée de l'axe de rotation 14 de la roue avant 10.

Il est à noter que des trajectoires variées de débattement de l'axe 14 de roue avant 10 peuvent être adoptées suivant les usages du véhicule, par exemple routier, sportif, compétition. À cet effet, il est possible d'offrir un train avant réglable, par exemple en plaçant une ou plusieurs articulations 15, 16, 17, 18 sur des excentriques (non représentés) comme indiqué ci-dessus, en sorte de pouvoir modifier les distances constitutives du parallélogramme déformable.

Il est ainsi possible de dissocier la réaction de la fourche en détente et en compression ; on peut obtenir suivant le réglage des excentriques ou à la conception du train avant, par exemple :
- un empattement e constant en compression, et un empattement e légèrement croissant en détente : l'intérêt d'une telle configuration se trouve dans des applications en circuit du dispositif de train avant décrit ; ou
- une réduction de l'empattement e en compression, et un empattement e constant en détente.

Ces modifications de la réaction de la fourche sont avantageusement obtenues par la variation d'une des dimensions du parallélogramme, de préférence par la variation de la longueur des bras médians inférieurs 9a, 9b, ces deux pièces étant les plus simples à fabriquer et à remplacer.

## Revendications

1. Dispositif (1) de train avant de véhicule comportant :
- un axe de direction (2), apte à être lié à une colonne de direction (3) du châssis du véhicule selon une liaison comportant un degré de liberté en rotation,
- un té de fourche supérieur (4) lié au dit axe de direction,
- un té de fourche inférieur (5) lié au dit axe de direction,
- au moins un bras supérieur (6a, 6b) de fourche, fixé sur lesdits tés de fourche supérieur et inférieur,
- au moins un bras inférieur (7a, 7b) de fourche, lié au dit au moins un bras supérieur de fourche, au moyen d'une liaison de type parallélogramme déformable, par l'intermédiaire d'au moins un bras médian supérieur (8) et au moins un bras médian inférieur (9a, 9b), articulés à leurs deux extrémités sur ledit au moins un bras supérieur de fourche et au moins un bras inférieur de fourche, respectivement,
- une roue avant (10) directrice unique, montée rotative sur ledit au moins un bras inférieur (7a, 7b) de fourche,
- des moyens de suspension (11) conférant une liaison élastique amortie entre ledit au moins un bras inférieur (7a, 7b) de fourche et ledit au moins un bras supérieur (6a, 6b) de fourche,
- lesdits au moins un bras médian supérieur et inférieur articulés sont disposés au-dessous du té de fourche inférieur, ***caractérisé en ce que*** lesdits au moins un bras médian supérieur (8) et inférieur (9a, 9b) articulés s'étendent en avant dudit au moins un bras supérieur (6a, 6b) de fourche.

2. Dispositif (1) de train avant suivant la revendication 1, dans lequel les axes d'articulation (15, 16) desdits au moins un bras médian supérieur (8) et bras médian inférieur (9a, 9b), sur ledit au moins un bras supérieur (6a, 6b) de fourche, sont disposées au-dessous du té de fourche inférieur (5).

3. Dispositif (1) de train avant suivant la revendication 1 ou 2, dans lequel les moyens de suspension comprennent au moins un amortisseur (11), de type à gaz ou à ressort, disposé en avant dudit au moins un bras supérieur (6a, 6b) de fourche, et dont une extrémité inférieure (12) est liée au dit au moins un bras médian supérieur (8).

4. Dispositif (1) de train avant suivant la revendication 3, dans lequel ledit au moins un bras médian supérieur (8) est unique de type monobloc, et ledit amortisseur (11) de suspension est unique et disposé dans le plan de la roue avant (10) unique.

5. Dispositif (1) de train avant suivant la revendication 4, dans lequel l'extrémité supérieure (13) dudit amortisseur (11) de suspension unique est liée dans la zone du té de fourche supérieur (4).

6. Dispositif (1) de train avant suivant l'une quelconque des revendications 1 à 5, dans lequel l'axe d'articulation (17) dudit au moins un bras médian supérieur (8) sur ledit au moins un bras inférieur (7a, 7b), est adjacent à la bande de roulement de la roue avant unique (10).

7. Dispositif (1) de train avant suivant l'une quelconque des revendications 1 à 6, dans lequel le bras médian supérieur (8) unique adopte une forme de U dont les extrémités libres des branches du U sont articulées sur les parties inférieures des bras supérieurs (6a, 6b), au-dessous du té inférieur (5) de fourche, et dont la base du U est articulée aux extrémités supérieures des bras inférieurs de fourche (7a, 7b).

8. Dispositif (1) de train avant suivant l'une quelconque des revendications 1 à 7, dans lequel deux bras supérieurs de fourche, droite (6a) et gauche (6b), sont fixés aux deux extrémités latérales droite et gauche des deux tés de fourche supérieur (4) et inférieur (5), respectivement, et dans lequel deux bras inférieurs de fourche, droite (7a) et gauche (7b), disposés de part et d'autre de la roue avant (10) unique, sont liés respectivement aux dits deux bras supérieurs (6a, 6b) de fourche par ladite liaison à parallélogramme déformable, qui comprend un bras médian supérieur (8) unique, de type monobloc, et deux bras médians inférieurs dissociés droite (9a) et gauche (9b).

9. Dispositif (1) de train avant suivant la revendication 8, dans lequel lesdits deux bras médians inférieurs dissociés, droite (9a) et gauche (9b), sont disposés respectivement de part et d'autre de la roue avant (10) unique.

10. Dispositif (1) de train avant suivant la revendication 9, dans lequel les articulations situées aux deux extrémités desdits bras médians inférieurs droit (9a) et gauche (9b) dissociés, sont disposées respectivement du côté droit et du côté gauche de la roue avant (10) unique, une projection des articulations du bras médian inférieur droit sur les articulations du bras médian inférieur gauche suivant une direction parallèle à l'axe (14) de rotation de la roue avant, interceptant cette dernière.

11. Dispositif (1) de train avant suivant l'une quelconque des revendications 1 à 10, comportant en outre des moyens de réglage de la distance entre les articulations (15, 16) dudit au moins un bras médian supérieur (8) et dudit au moins un bras médian inférieur (9a, 9b) sur ledit au moins un bras supérieur (6a, 6b) de fourche, d'une part, et le té de fourche inférieur (5) d'autre part.

12. Dispositif (1) de train avant suivant la revendication 11, dans lequel ledit au moins un bras supérieur (6a, 6b) de fourche adopte une forme cylindrique, en prise dans les tés de fourche supérieur (4) et inférieur (5), et dont la position de fixation par rapport à ces derniers est réglable le long d'une partie au moins de la forme cylindrique.

13. Dispositif (1) de train avant suivant la revendication 12, dans lequel la forme cylindrique dudit au moins un bras supérieur (6a, 6b) de fourche adopte une section transversale circulaire, en prise par serrage dans deux logements formés dans les deux tés de fourche supérieur (4) et inférieur (5), respectivement, dont la section est complémentaire de la section transversale circulaire du bras supérieur (6a, 6b) de fourche.

14. Dispositif (1) de train avant suivant l'une quelconque des revendications 3 à 10, prise en combinaison avec l'une des revendications 11 à 13, dans lequel l'extrémité supérieure (13) dudit amortisseur (11) de suspension unique est liée au té supérieur (4) de fourche selon une liaison comportant au moins un degré de liberté en translation autorisant une position réglable de ladite extrémité supérieure de l'amortisseur par rapport au té de fourche supérieur.

15. Véhicule ***caractérisé en ce qu'**il* comprend un dispositif de train avant selon l'une des revendications 1 à 14.

16. Véhicule suivant la revendication 15, dans lequel lesdits au moins un bras médian supérieur (8) et au moins un bras médian inférieur (9a, 9b), sont respectivement disposés dans deux plans sensiblement parallèles et horizontaux lorsque ledit dispositif de train avant est placé dans une position à l'arrêt en charge du poids du véhicule, dite position de repos du dispositif de train avant.

17. Véhicule suivant la revendication 15 ou 16, dans lequel ledit au moins un bras inférieur (7a, 7b) de fourche, est disposé dans un plan sensiblement vertical passant par l'axe (14) de rotation de la roue avant (10), lorsque ledit dispositif de train avant est placé dans une position à l'arrêt en charge du poids du véhicule, dite position de repos du dispositif de train avant.

18. Véhicule suivant l'une quelconque des revendications 15 à 17, comportant en outre des moyens de réglage de la distance entre les articulations (15, 16) dudit au moins un bras médian supérieur (8) et dudit au moins un bras médian inférieur (9a, 9b) sur ledit au moins un bras supérieur (6a, 6b) de fourche, d'une part, et le té de fourche inférieur (5) d'autre part, afin de régler l'assiette du véhicule.

19. Véhicule suivant l'une quelconque des revendications 15 à 18, dans lequel ledit au moins un bras supérieur (6a, 6b) de fourche, ledit au moins un bras inférieur (7a, 7b) de fourche, et lesdits moins un bras médian supérieur (8) et au moins un bras médian inférieur (9a, 9b), sont agencés via l'agencement de leurs articulations (15, 16, 17, 18) définissant ledit système à parallélogramme déformable, de telle sorte que :
- ledit dispositif de train avant soit mobile entre deux positions extrêmes :
- une première position dite de détente, et
- une deuxième position dite de compression, et que
- l'empattement (e) du véhicule soit sensiblement constant lors du débattement du dispositif de train avant entre les deux dites positions extrêmes.

## Patentansprüche

1. Frontvorrichtung (1) für ein Fahrzeug, welche aufweist:
- eine Lenkachse (2), welche geeignet ist, gemäß einer Verbindung mit einem Rotationsfreiheitsgrad mit einer Lenksäule (3) des Fahrgestells des Fahrzeugs verbunden zu werden,
- eine obere Gabelbrücke (4), welche mit der Lenkachse verbunden ist,
- eine untere Gabelbrücke (5), welche mit der Lenkachse verbunden ist,
- mindestens einem oberen Gabelarm (6a, 6b), welcher an der oberen und unteren Gabelbrücke fixiert ist,
- mindestens einen unteren Gabelarm (7a, 7b), welcher mit dem mindestens einen oberen Gabelarm, mittels einer Verbindung vom Typ eines deformierbaren Parallelogramms verbunden ist, über mindestens einen oberen Mittel-arm (8) und mindestens einem unteren Mittelarm (9a, 9b), wobei deren zwei Enden jeweils an dem mindestens einen oberen Gabelarm und dem mindestens einen unteren Gabelarm angelenkt sind,
- ein einzelnes lenkbares Vorderrad (10), welches drehbar auf dem mindestens einen unteren Gabelarm (7a, 7b) montiert ist,
- Federungsmittel (11), welche zwischen dem mindestens einen unteren Gabelarm (7a, 7b) und dem mindestens einen oberen Gabelarm (6a, 6b) eine gedämpfte elastische Verbindung bereitstellen,
- wobei der mindestens einen angelenkte obere Mittelarm und der mindestens eine angelenkte untere Mittelarm unter der unteren Gabelbrücke angeordnet sind,
dadurch g**ekennzeichnet,**
dass der mindestens eine angelenkte obere Mittelarm (8) und der mindestens eine angelenkte untere Mittelarm (9a, 9b) sich von dem mindestens einen oberen Gabelarm (6a, 6b) nach vorne erstrecken.

2. Frontvorrichtung (1) nach Anspruch 1,
bei der die Anlenkachsen (15, 16) des mindestens einen oberen Mittelarms (8) und des mindestens einen unteren Mittelarms (9a, 9b) auf dem mindestens einen oberen Gabelarm (6a, 6b) unter der unteren Gabelbrücke (5) angeordnet sind.

3. Frontvorrichtung (1) nach den Ansprüchen 1 oder 2,
bei der die Federungsmittel mindestens einen Dämpfer (11) vom Typ eines Gasdämpfers oder Federdämpfers aufweisen, welcher von dem mindestens einen oberen Gabelarm (6a, 6b) aus gesehen nach vorne angeordnet ist und wessen eines unteres Ende (12) mit dem mindestens einen oberen Mittelarm (8) verbunden ist.

4. Frontvorrichtung (1) nach Anspruch 3,
bei der der mindestens eine obere Mittelarm (8) einteilig vom Typ eines Monoblocks ist und der Federungsdämpfer (11) einteilig ist und in der Ebene des einzelnen Vorderrads (10) angeordnet ist.

5. Frontvorrichtung (1) nach Anspruch 4,
bei der das obere Ende (13) des einzelnen Federungsdämpfers (11) im Bereich der oberen Gabelbrücke (4) verbunden ist.

6. Frontvorrichtung (1) nach einem der Ansprüche 1 bis 5,
bei der die Anlenkachse (17) des mindestens einen oberen Mittelarms (8) auf dem mindestens einen unteren Arm (7a, 7b) an die Lauffläche des einzelnen Vorderrads (10) angrenzend ist.

7. Frontvorrichtung (1) nach einem der Ansprüche 1 bis 6,
bei der der einzelne obere Mittelarm (8) eine U-Form annimmt, dessen freien Enden der U-Äste auf den unteren Abschnitten der oberen Arme (6a, 6b) unter der unteren Gabelbrücke (5) angelenkt sind, und dessen U-Basis an den oberen Enden der unteren Gabelarme (7a, 7b) angelenkt ist.

8. Frontvorrichtung (1) nach einem der Ansprüche 1 bis 7,
bei der der rechte Gabelarm (6a) und der linke Gabelarm (6b) der zwei oberen Gabelarme an den zwei rechten seitlichen Gabelbrückenenden beziehungsweise den zwei linken seitlichen Gabelbrückenenden der oberen Gabelbrücke (4) und der unteren Gabelbrücke (5) befestigt sind, und bei der der rechte Gabelarm (7a) und der linke Gabelarm (7b) der zwei unteren Gabelarme, welche auf beiden Seiten des einzelnen Vorderrads (10) angeordnet sind, jeweils mit den zwei oberen Gabelarmen (6a, 6b) mittels der Verbindung eines deformierbaren Parallelogramms verbunden sind, wobei das Parallelogramm einen einzelnen oberen Mittelarm (8) vom Typ eines Monoblocks und zwei getrennte untere Mittelarme, einen rechten unteren Mittelarm (9a) und einen linken unteren Mittelarm (9b), aufweist.

9. Frontvorrichtung (1) nach Anspruch 8,
bei der die zwei getrennten unteren Mittelarme, der rechte untere Mittelarm (9a) und der linke untere Mittelarm (9b), jeweils auf einer der beiden Seiten des einzelnen Vorderrads (10) angeordnet sind.

10. Frontvorrichtung (1) nach Anspruch 9,
bei der die Gelenke, welche sich auf den zwei Enden des getrennten rechten unteren Mittelarms (9a) und des getrennten linken unteren Mittelarms (9b) befinden, auf der rechten Seite und der linken Seite des einzelnen Vorderrads (10) angeordnet sind, wobei eine Projektion der Gelenke des rechten unteren Mittel-arms auf die Gelenke des linken unteren Mittelarms einer Richtung folgt, welche parallel zu der Rotationsachse (14) des Vorderrads ist und durch letztere hindurchtritt.

11. Frontvorrichtung (1) nach einem der Ansprüche 1 bis 10,
welche außerdem Distanzregelungsmittel zwischen den Gelenken (15, 16) des mindestens einen oberen Mittelarms (8) und des mindestens einen unteren Mittelarms (9a, 9b) auf dem mindestens einen oberen Gabelarm (6a, 6b) einerseits und der unteren Gabelbrücke (5) andererseits aufweist.

12. Frontvorrichtung (1) nach Anspruch 11,
bei der der mindestens eine obere Gabelarm (6a, 6b) in Eingriffnahme der oberen Gabelbrücke (4) und der unteren Gabelbrücke (5) eine zylindrische Form annimmt und dessen Fixierungsposition gegenüber den letzteren entlang mindestens einem Abschnitt der zylindrischen Form verschiebbar ist.

13. Frontvorrichtung (1) nach Anspruch 12,
bei der die zylindrische Form des mindestens einen oberen Gabelarms (6a, 6b) innerhalb der Klemmeingriffnahme zweier Einhausungen, welche in den zwei Gabelbrücken, der oberen Gabelbrücke (4) beziehungsweise der unteren Gabelbrücke (5), ausgebildet sind, einen runden Querschnitt annimmt, deren Querschnitt komplementär zu dem runden Querschnitt des oberen Gabelarms (6a, 6b) ist.

14. Frontvorrichtung (1) nach einem der Ansprüche 3 bis 10 in Kombination mit einem der Ansprüche 11 bis 13,
bei der das obere Ende (13) des einzelnen Federungsdämpfers (11) mit der oberen Gabelbrücke (4) gemäß einer Verbindung mit mindestens einem Translationsfreiheitsgrad verbunden ist, wobei eine verschiebbare Position des oberen Endes des Dämpfers gegenüber der oberen Gabelbrücke zugelassen ist.

15. Fahrzeug,
**dadurch gekennzeichnet,**
**dass** es eine Frontvorrichtung nach einem der Ansprüche 1 bis 14 aufweist.

16. Fahrzeug nach Anspruch 15,
bei dem der mindestens eine obere Mittelarm (8) und der mindestens eine untere Mittelarm (9a, 9b) jeweils in zwei in etwa parallelen und horizontalen Ebenen angeordnet sind, wenn die Frontvorrichtung unter Belastung des Fahrzeuggewichts in einer Halteposition, als sogenannte Ruheposition der Frontvorrichtung, platziert ist.

17. Fahrzeug nach Anspruch 15 oder 16,
bei der der mindestens eine untere Gabelarm (7a, 7b) in einer in etwa vertikalen Ebene, welche die Rotationsachse (14) des Vorderrads (10) durchläuft, ange-ordnet ist, wenn die Frontvorrichtung unter Belastung des Fahrzeuggewichts in einer Halteposition, als sogenannte Ruheposition der Frontvorrichtung, platziert ist.

18. Fahrzeug nach einem der Ansprüche 15 bis 17,
welches außerdem Distanzregelungsmittel zwischen den Gelenken (15, 16) des mindestens einen oberen Mittelarms (8) und des mindestens einen unteren Mittelarms (9a, 9b) auf dem mindestens einen oberen Gabelarm (6a, 6b) einerseits und der unteren Gabelbrücke (5) andererseits aufweist, um die Fahrzeugtrimmlage zu regeln.

19. Fahrzeug nach einem der Ansprüche 15 bis 18,
bei dem der mindestens eine obere Gabelarm (6a, 6b), der mindestens eine untere Gabelarm (7a, 7b), der mindestens eine obere Mittelarm (8) und der mindestens eine untere Mittelarm (9a, 9b) über die Anordnung ihrer Gelenke (15, 16, 17, 18) angeordnet sind, wobei das System eines deformierbaren Parallelogramms derart definiert ist, dass:
- die Frontvorrichtung zwischen zwei Extrempositionen beweglich ist:
-- einer ersten Ausdehnungsposition und
-- einer zweiten Kompressionsposition, und dass
- der Achsabstand (e) des Fahrzeugs bei einem Federweg der Frontvorrichtung zwischen den zwei Extrempositionen in etwa konstant ist.

## Claims

1. Front end device (1) for a vehicle, comprising
- a steering shaft, (2), that can be connected to a steering column (3) of the chassis of the vehicle in a connection that comprises a degree of freedom in rotation,
- an upper fork crown (4) connected to said steering shaft,
- a lower fork crown (5) connected to said steering shaft,
- at least one upper fork arm (6a, 6b), fixed to the upper and lower fork crowns,
- at least one lower fork crown (7a, 7b), connected to the at least one upper fork arm by means of a connection of the deformable parallelogram type, using at least one upper middle arm (8) and at least one lower middle arm (9a, 9b), which are articulated at their two ends to the said at least one upper fork arm and at least one lower fork arm respectively,
- a single steered front wheel (10), mounted so that it can rotate on the said at least one lower fork arm (7a, 7b),
- suspension means (11) providing a damped elastic connection between the said at least one lower fork arm (7a, 7b) and the at least one upper fork arm (6a, 6b),
- the said at least one articulated upper and lower middle arms being positioned below the lower fork crown,
***characterised in that*** the said at least one articulated upper middle arm (8) and lower middle arm (9a, 9b) extend forward of the upper fork arm (6a, 6b).

2. Front end device (1) according to claim 1, **characterised in that** the articulation shafts (15, 16) of the said at least one upper middle arm (8) and lower middle arm (9a, 9b), on the said at least one upper fork arm (6a, 6b), are arranged below the lower fork crown (5).

3. Front end device (1) according to claim 1 or 2, **characterised in that** the suspension means comprising at least one damper or shock-absorber (11), of the gas or spring type, arranged forward of the said at least one upper fork arm (6a, 6b), and of which one lower end (12) is connected to the said at least one upper middle arm (8).

4. Front end device (1) according to claim 3, **characterised in that** the said at least one upper middle arm (8) is single and of the one-piece type, and the said suspension damper (11) is single and arranged in the plane of the single front wheel (10).

5. Front end device (1) according to claim 4, **characterised in that** the upper end (13) of the said single suspension damper (11) is connected in the region of the upper fork crown (4).

6. Front end device (1) according to any one of claims 1 to 5, **characterised in that** the articulation shaft (17) of the said at least one upper middle arm (8) on the said at least one lower arm (7a, 7b) is adjacent to the tread of the single front wheel (10).

7. Front end device (1) according to any one of claims 1 to 6, **characterised in that** the single upper middle arm (8) adopts a U-shape, of which the free ends of the arms of the U are articulated on the lower parts of the upper arms (6a, 6b), below the lower fork crown (5), and of which the base of the U is jointed to the upper ends of the lower fork arms (7a, 7b).

8. Front end device (1) according to any one of claims 1 to 7, **characterised in that** the two upper fork arms, right (6a) and left (6b), are fixed to the two lateral ends, right and left, of the two upper (4) and lower (5) fork crowns respectively, and **characterized in that** two lower fork arms, right (7a) and left (7b), arranged on one side and the other of the single front wheel (10), are connected respectively to the said two upper fork arms (6a, 6b) by the said deformable parallelogram connection, which comprises a single upper middle arm (8), of the one-piece type, and two disassociated lower middle arms, right (9a) and left (9b).

9. Front end device (1) according to claim 8, **characterised in that** the said two disassociated lower middle arms, right (9a) and left (9b) are arranged respectively on one side and the other of the single front wheel (10).

10. Front end device (1) according to claim 9, **characterised in that** the joints located at the two ends of the said disassociated lower middle arms, right (9a) and left (9b), are arranged respectively on the right side and left side of the single front wheel (10), with a projection of the articulation joints of the right lower middle arm onto the articulation joints of the left lower middle arm, following a direction parallel to the axis (14) of rotation of the front wheel, intercepting the latter.

11. Front end device (1) according to any one of claims 1 to 10, further comprising means for adjusting the distance between the articulation joints (15, 16) of the said at least one upper middle arm (8) and of the said at least one lower middle arm (9a, 9b) on the said at least one upper fork arm (6a, 6b), on the one hand, and the lower fork crown (5) on the other.

12. Front end device (1) according to claim 11, **characterised in that** the said at least one upper fork arm (6a, 6b) comprises a cylindrical shape, accommodated in the upper (4) and lower (5) fork crowns, and of which position of fixation in relation to the latter can be adjusted along the length of at least a part of the cylindrical shape.

13. Front end device (1) according to claim 12, **characterised in that** the cylindrical shape of the said at least one upper fork arm (6a, 6b) comprises a circular transverse section, accommodated by locking in two mountings formed in the two fork crowns, upper (4) and lower (5) respectively, the section of which is complementary to the circular transverse section of the upper fork arm (6a, 6b).

14. Front end device (1) according to any one of claims 3 to 10, taken in combination with one of claims 11 to 13, **characterized in that** the upper end (13) of the said single suspension damper (11) is connected to the upper (4) fork crown by means of a connection comprising at least one degree of freedom in translation, so allowing for an adjustable position of the said upper end of the damper in relation to the upper fork crown.

15. Vehicle ***characterised in that*** it comprises a front end device according to one of claims 1 to 14.

16. Vehicle according to claim 15, **characterised in that** the said at least one upper middle arm (8) and at least one lower middle arm (9a, 9b) are arranged respectively in two essentially parallel and horizontal planes when the said front end device is placed in a stop position, bearing the weight of the vehicle, referred to as the position of rest of the front end device.

17. Vehicle according to claim 15 or 16, **characterised in that** the said at least one lower fork crown (7a, 7b) is arranged in an essentially vertical plane passing through the axis (14) of rotation of the front wheel (10), when the said front end device is placed in a stop position, bearing the weight of the vehicle, referred to as the position of rest of the front end device.

18. Vehicle according to any one of claims 15 to 17, comprising means of adjusting the distance between the articulation joints (15, 16) of the said at least one upper middle arm (8) and of the said at least one lower middle arm (9a, 9b) on the said at least one upper fork arm (6a, 6b), on the one hand, and the lower fork crown (5) on the other, in order to adjust the trim of the vehicle.

19. Vehicle according to any of claims 15 to 18, **characterised in that** the said at least one upper fork arm (6a, 6b), the said at least one lower fork arm (7a, 7b), and the said at least one upper middle arm (8) and at least one lower middle arm (9a, 9b) are actuated by way of their articulation joints (15, 16, 17, 18) defining the said deformable parallelogram system, in such a way that:
- the said front end device is movable between two end positions:
- a first position, referred to as expansion, and
- a second position, referred to as compression, and that
- the wheel base (e) of the vehicle is essentially constant during the travel of the front end device between the said end positions.
